## Europäisches Patentamt
## European Patent Office
## Office européen des brevets

(11) Veröffentlichungsnummer: **0 094 551**
**B1**

(12) **EUROPÄISCHE PATENTSCHRIFT**

(45) Veröffentlichungstag der Patentschrift:
**27.08.86**

(51) Int. Cl.⁴: **A 01 B 3/42**

(21) Anmeldenummer: **83104340.1**

(22) Anmeldetag: **03.05.83**

(54) **Drehpflug.**

(30) Priorität: **15.05.82 DE 8214241 U**

(43) Veröffentlichungstag der Anmeldung:
**23.11.83 Patentblatt 83/47**

(45) Bekanntmachung des Hinweises auf die Patenterteilung:
**27.08.86 Patentblatt 86/35**

(84) Benannte Vertragsstaaten:
**DE GB NL**

(56) Entgegenhaltungen:
**EP - A - 0 012 997**
**DE - A - 2 413 331**
**DE - U - 8 214 241**
**FR - A - 2 234 837**

(73) Patentinhaber: **H. Niemeyer Söhne GmbH & Co. KG,**
**Heinrich-Niemeyer-Strasse 52, D-4446 Hörstel (DE)**

(72) Erfinder: **Barlage, Bruno, Dipl.-Ing.,**
**Beethovenstrasse 13, D-4446 Hörstel (DE)**
Erfinder: **Laumann, Berhard, Lindenstrasse 6,**
**D-4446 Hörstel (DE)**

(74) Vertreter: **Busse & Busse Patentanwälte,**
**Postfach 1226 Grosshandelsring 6, D-4500 Osnabrück**
**(DE)**

## Beschreibung

Die Erfindung betrifft einen Drehpflug nach dem Oberbegriff des Patentanspruchs 1.

Bei einem bekannten Drehpflug dieser Art (DE-A 2 413 331) stellt die Lenkerstange eine ständige Verbindung des Anschlusspunktes am Pflugrahmen mit dem vertikal im Abstand unter der Mittelachse der Wendewelle am Anbaugestell angeordneten Anschlusspunkt her, so dass bei jedem Drehen des Pflugrahmens aus einer Arbeitsstellung in die andere Arbeitsstellung der Pflugrahmen eine Verstellung seiner Schwenklage relativ zur Wendewelle erfährt. Diese Verstellung der Schwenklage vergrössert beim Drehen des Pflugrahmens die Bodenfreiheit des Drehpfluges, insbesondere im Bereich seines Stützrades.

Eine entsprechende Wirkung hat auch die Lenkerstange bei einem ferner bekannten Drehpflug (EP-A 12 997), bei dem anstelle einer Wendewelle ein fest mit dem Anbaugestell verbundenes Tragrohr vorgesehen ist, auf dem der Pflugrahmen mit einem vorderen und einem rückwärtigen Drehlager drehbar gelagert ist. Bei dieser Pflugausführung ist das vordere Drehlager quer zur Drehachse im Pflugrahmen beweglich gelagert, und die Lenkerstange verbindet ständig einen Anschlusspunkt am Pflugrahmen mit einem vertikal unterhalb der Drehachse am Tragrohr angeordneten Anschlusspunkt.

Der Erfindung liegt die Aufgabe zugrunde, einen Drehpflug der im Oberbegriff des Patentanspruchs 1 angegebenen Art so auszugestalten, dass er sowohl mit als auch ohne Verstellung der Schwenklage des Pflugrahmens relativ zur Wendewelle beim Drehen aus einer Arbeitsstellung in die andere Arbeitsstellung benutzbar ist.

Diese Aufgabe löst der Drehpflug nach der Erfindung mit den im kennzeichnenden Teil des Patentanspruchs 1 angegebenen Merkmalen. Hinsichtlich weiterer Ausgestaltungen wird auf die Patentansprüche 2 bis 7 verwiesen.

Die Erfindung schafft einen Drehpflug, der nur im Bedarfsfalle mit einer Verstellung der Schwenklage seines Pflugrahmens relativ zur Wendewelle betreibbar ist, um die Bodenfreiheit des Drehpfluges zu vergrössern. In Fällen, in denen eine solche Vergrösserung der Bodenfreiheit des Drehpfluges nicht erforderlich ist, kann auf einfache Weise die Schwenkverstellung des Pflugrahmens unterbunden werden, was im Interesse möglichst geringen Verschleisses in jenen Bereichen wünschenswert ist, in denen sich der Pflugrahmen an der Wendewelle abstützt. Ungeachtet der Frage, ob der Pflug von seiner Scharbestückung her eine Schwenkverstellung erforderlich macht oder nicht, kann dem Pflug ein und dieselbe Grundgestalt gegeben werden, so dass sich der Pflugbenutzer zu jeder Zeit, auch gegebenenfalls nach Scharerweiterung der häufig im Baukastensystem ausgeführten Pflüge, entscheiden kann, ob er seinen Pflug mit oder ohne Schwenkverstellung betreiben will.

Ein Ausführungsbeispiel des Gegenstands der Erfindung ist in der Zeichnung näher veranschaulicht. Im einzelnen zeigen:

Fig. 1 eine Draufsicht auf den vorderen Bereich eines Drehpfluges nach der Erfindung,

Fig. 2 einen schematischen Schnitt nach der Linie II–II in Fig. 1,

Fig. 3 eine abgebrochene Ausschnittvergrösserung des Bereiches der Wendewelle unmittelbar im Anschluss an das Anbaugestell, teilweise im Schnitt, und

Fig. 4 einen Teilschnitt nach der Linie IV–IV in Fig. 1.

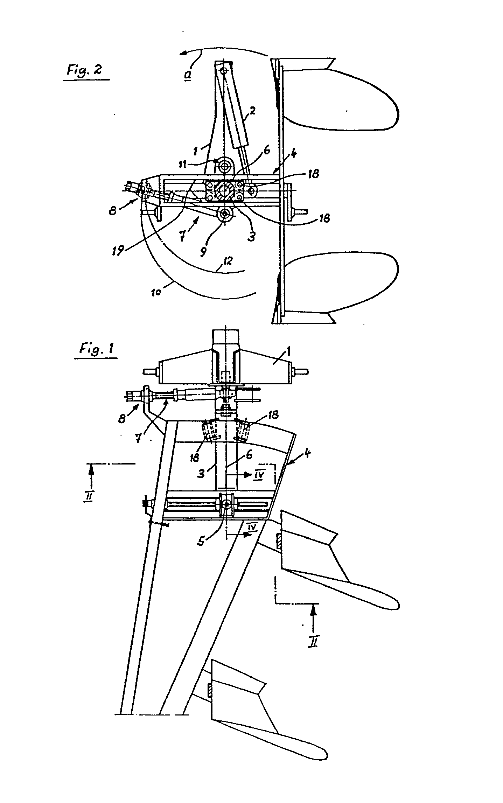

Der Pflug gemäss dem dargestellten Ausführungsbeispiel besteht aus einem mit der Dreipunkt-Hydraulik eines landwirtschaftlichen Schleppers od. dgl. Zugfahrzeugs verbindbaren Anbaugestell 1, einer in einem Lager dieses Anbaugestells schwenkbar gelagerten und mittels einer Antriebsvorrichtung 2, zum Beispiel einem Hydraulikzylinder, aus einer ersten Arbeitsstellung gemäss Fig. 1 und 2 um etwa 130° in eine zweite Arbeitsstellung über Kopf drehbaren Wendewelle 3, einem Pflugrahmen 4, der mit der Wendewelle 3 um eine in den Arbeitsstellungen etwa lotrechte Gelenkachse 5 schwenkbar verbunden ist, sich in seinem vorderen Bereich und im Bereich der Gelenkachse 5 auf der Wendewelle abstützt, einen in den Arbeitsstellungen etwa in Höhe der Mittelachse 5 der Wendewelle gelegenen Schwerpunkt aufweist und beim Drehen der Wendewelle jeweils mit seiner in Fig. 1 und 2 rechts dargestellten Pflugkörperseite über die Wendewelle hinwegdreht.

Zwischen dem Anbaugestell 1 und dem Pflugrahmen 4 ist vor dessen vorderen Bereich eine längeneinstellbare Lenkerstange 7 zwischengeordnet, die drehgelenkig mit einem Anschlusspunkt 8 am Pflugrahmen 4 und ebenfalls drehgelenkig mit einem vertikal im Abstand unter der Mittelachse 6 der Wendewelle 3 am Anbaugestell 1 angeordneten Anschlusspunkt 9 verbunden ist.

Bei Vorliegen der Verbindung der Anschlusspunkte 8, 9 durch die Stellstange 7 bewegt sich der Anschlusspunkt 8 auf einer Kurvenbahn 10, die um die Exzentrizität des Anschlusspunktes 9 gegenüber der Mittelachse 6 der Wendewelle 3 abwärts verschoben ist und ein Schwenken des Pflugrahmens 4 um dessen Gelenkachse 5 bewirkt, wenn über den Antrieb 2 der Pflugrahmen mit den Scharen über Kopf in Richtung des Pfeiles a aus seiner dargestellten Arbeitsstellung in seine andere Arbeitsstellung oder umgekehrt gedreht wird. Auf der Wendewelle 3 ist nun ein weiterer Anschlusspunkt 11 angebracht, der die Möglichkeit eröffnet, die Lenkerstange 7 statt mit dem Anschlusspunkt 9 mit diesem Anschlusspunkt 11 zu verbinden. In diesem Falle bewegt sich der Verbindungspunkt 8 auf einer Kreisbahn 12, die konzentrisch zur Mittelachse 6 der Wendewelle verläuft. Dementsprechend erfährt der Pflugrahmen 4 bei Pflugdrehungen keinerlei Schwenkverlagerung relativ zur Wendewelle 3.

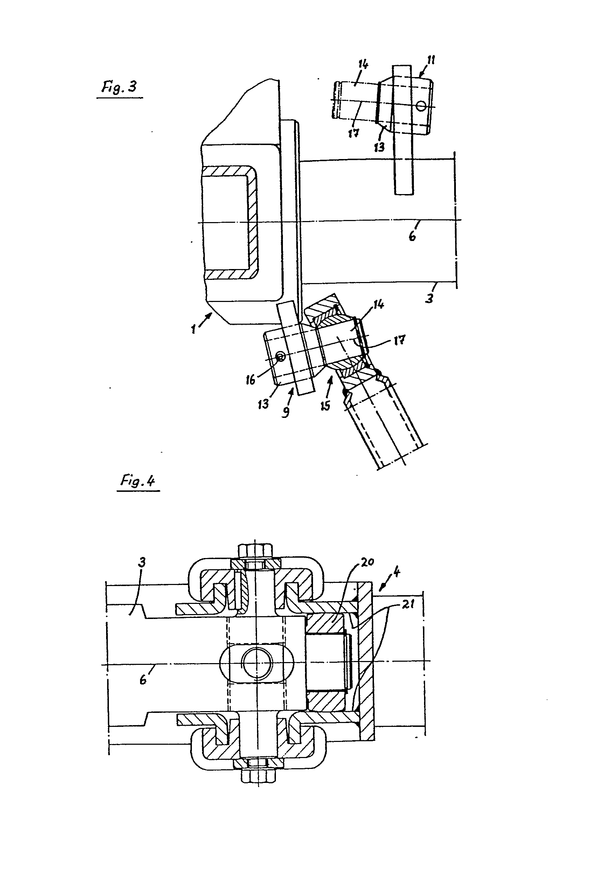

Wie der Fig. 3 näher entnommen werden kann, bilden der Anschlusspunkt 9 am Anbaugestell 1 und der Anschlusspunkt 11 an der Wendewelle 3 jeweils eine Aufnahme in Gestalt einer Hülse 13, in die der Kugelgelenkzapfen 14 eines Kugelgelenkes 15 am innenliegenden Ende der Lenkerstange 7 einsetzt und mittels eines Sicherungsquersteckers 16 festlegbar ist. Dies ermöglicht es, bei einem Umsetzen der Lenkerstange 7 den Kugelgelenkzapfen umzustecken, so dass die Verbindung zwischen dem Kugelgelenkzapfen und der Gelenkkugel des Kugelgelenks 15 nicht gelöst zu werden braucht. Sowohl die Aufnahme 13 am Anbaugestell 1 als auch die an der Wendewelle gibt dem Kugelgelenkzapfen 14 eine Ausrichtung vor, bei der die in einer gemeinsamen Ebene mit der Mittelachse 6 der Wendewelle gelegene Zapfenachse 17 die Mittelachse 6 der Wendewelle 3 unter einem spitzen Winkel schneidet. Dies erleichtert die konstruktive Gestaltung der drehgelenkigen Verbindungen zwischen der Lenkerstange und dem Pflugrahmen bzw. dem Anbaugestell oder Wendewelle.

Zur verschleissärmeren Abstützung des Pflugrahmens gegenüber der Wendewelle sind an dieser drehbar gelagerte Führungsrollen 18 angebracht, die mit Führungsbahnen 19 im vorderen Bereich des Pflugrahmens 4 zusammenwirken.

Auch im Bereich der Gelenkachse 5 ist am rückwärtigen Ende der Wendewelle 3, wie dies der Fig. 4 entnommen werden kann, eine Führungsrolle 20 drehbar gelagert, die koaxial zur Mittelachse 6 der Wendewelle 3 angeordnet ist und Laufbahnen 21 des Pflugrahmens in diesem Bereich abstützt.

**Patentansprüche**

1. Drehpflug mit einem mit der Dreipunkthydraulik eines landwirtschaftlichen Zugfahrzeugs verbindbaren Anbaugestell (1), einer in einem Lager des Anbaugestells (1) schwenkbar gelagerten und mittels einer Antriebsvorrichtung (2) aus einer ersten Arbeitsstellung in eine zweite Arbeitsstellung drehbaren Wendewelle (3), einem Pflugrahmen (4), der mit der Wendewelle (3) um eine in den Arbeitsstellungen etwa lotrechte Gelenkachse (5) schwenkbar verbunden ist, sich in seinem Vorderbereich und im Bereich der Gelenkachse (5) über Führungen (18, 19, 20) auf der Wendewelle (3) abstützt, einen in den Arbeitsstellungen etwa in Höhe der Mittelachse (6) der Wendewelle (3) gelegenen Schwerpunkt aufweist und beim Drehen der Wendewelle (3) aus der ersten in die zweite Arbeitsstellung und umgekehrt jeweils mit seiner Pflugkörperseite über die Wendewelle (3) hinwegdreht, und einer zwischen dem Anbaugestell (1) und dem Pflugrahmen (4) in dessen Vorderbereich zwischengeordneten, längeneinstellbaren Lenkerstange (7), die gelenkig mit einem Anschlusspunkt (8) am Pflugrahmen (4) verbunden ist und an einem vertikal im Abstand unter der Mittelachse (6) der Wendewelle (3) am Anbaugestell (1) angeordneten Anschlusspunkt (9) gelenkig angreift, dadurch gekennzeichnet, dass an der Wendewelle (3) ein weiterer Anschlusspunkt (11) vorgesehen und die Lenkerstange (7) wahlweise mit dem Anschlusspunkt (9) am Anbaugestell (1) oder mit dem (11) an der Wendewelle (3) verbindbar ist.

2. Drehpflug nach Anspruch 1, dadurch gekennzeichnet, dass die Anschlusspunkte (9, 11) am Anbaugestell (1) und an der Wendewelle (3) eine Aufnahme (13) für einen in diese einsetz- und festlegbaren sowie aus dieser herausnehmbaren Kugelgelenkzapfen (14) eines Kugelgelenkes (15) am inneren Ende der Lenkerstange (7) bilden.

3. Drehpflug nach Anspruch 2, dadurch gekennzeichnet, dass die Aufnahme (13) am Anbaugestell (1) dem Kugelgelenkzapfen (14) eine Ausrichtung vorgibt, bei der die in einer gemeinsamen Ebene mit der Mittelachse (6) der Wendewelle (3) gelegene Zapfenachse (17) die Mittelachse der Wendewelle unter einem spitzen Winkel schneidet.

4. Drehpflug nach Anspruch 2, dadurch gekennzeichnet, dass die Aufnahme (13) an der Wendewelle (3) dem Kugelgelenkzapfen (14) eine Ausrichtung vorgibt, bei der die in einer gemeinsamen Ebene mit der Mittelachse (6) der Wendewelle (3) gelegene Zapfenachse (17) die Mittelachse der Wendewelle unter einem spitzen Winkel schneidet.

5. Drehpflug nach einem oder mehreren der Ansprüche 1 bis 4, dadurch gekennzeichnet, dass sich der vordere Bereich des Pflugrahmens (4) mit Führungsbahnen (19) auf an der Wendewelle (3) angebrachten, drehbar gelagerten Führungsrollen (18) abstützt.

6. Drehpflug nach Anspruch 5, dadurch gekennzeichnet, dass die Drehachsen der Führungsrollen (18) eine radiale Ausrichtung zur Gelenkachse (5) zwischen dem Pflugrahmen (4) und der Wendewelle (3) aufweisen.

7. Drehpflug nach einem oder mehreren der Ansprüche 1 bis 6, dadurch gekennzeichnet, dass sich der Pflugrahmen (4) im Bereich der Gelenkachse (5) mit Führungsbahnen (21) auf einer koaxial am rückwärtigen Ende der Wendewelle (3) drehbar gelagerten Führungsrolle (20) abstützt.

**Claims**

1. A two-way turn-over plough having a detachable support (1) which can be connected to the three-point hydraulic system of an agricultural towing vehicle, a turnover shaft (3) which is pivotally mounted in a bearing of the detachable support (1) and can be turned, by means of a driving device (2), out of a first working position into a second working position, a plough frame (4) which is connected to the turnover shaft (3) for pivoting about a pivot pin (5) which is substantially vertical in the working positions, which frame is supported on the turnover shaft (3) through guides (18, 19, 20) in its front region and in the region of the pivot pin (5), has a centre of gravity situated substantially at the height of the centre axis (6) of the turnover shaft (3) in the working positions and, during the turning of the turnover shaft (3) out of the first working position into the second and vice versa, turns with its plough body side over the turnover shaft (3), and an adjusting rod (7) which is interposed between the detachable support (1) and the plough frame (4) in its front region, is adjustable in length, is articulately connected to a connecting point (8) on the plough frame (4) and acts articulately on a connecting point (9) disposed on the detachable support, vertically, with spacing, below the centre axis (6) of the turnover shaft (3), characterised in that a further connecting point (11) is provided on the turnover shaft (3) and the adjusting rod (7) can be connected selectively to the connection point (9) on the detachable support (1) or to that (11) on the turnover shaft (3).

2. A two-way turn-over plough as claimed in claim 1, characterised in that the connecting points (9, 11) on the detachable support (1) and on the turnover shaft (3) form a receiver (13) for a universal-jointed pin (14) of a ball-and-socket joint (15) at the inner end of the adjusting rod (7), which pin can be inserted and located in this receiver or removed therefrom.

3. A two-way turn-over plough as claimed in claim 2, characterised in that the receiver (13) on the detachable support (1) presets an alignment for the universal-jointed pin (14) wherein the pin axis (17) situated in a common plane with the centre axis (6) of the turnover shaft (3) intersects the centre axis of the turnover shaft at an acute angle.

4. A two-way turn-over plough as claimed in claim 2, characterised in that the receiver (13) on the turnover shaft (3) presets an alignment for the universal-jointed pin (14) wherein the pin axis (17) situated in a common plane with the centre axis of the turnover shaft (3) intersects the centre axis of the turnover shaft at an acute angle.

5. A two-way turn-over plough as claimed in any one of claims 1 to 4, characterised in that the front region of the plough frame (4) is supported by guideways (19) on rotatably mounted guide rollers (18) fitted to the turnover shaft (3).

6. A two-way turn-over plough as claimed in claim 5, characterised in that the axes of rotation of the guide rollers (18) have a radial alignment in relation to the pivot pin (5) between the plough frame (4) and the turnover shaft (3).

7. A two-way turn-over plough as claimed in any one of claims 1 to 6, characterised in that, in the region of the pivot pin (5), the plough frame (4) is supported by guideways (21) on a guide roller (2) rotatably mounted coaxially on the rear end of the turnover shaft (3).

**Revendications**

1. Charrue réversible comportant un bâti porté (1) pouvant être relié au système de relevage hydraulique d'un tracteur agricole, un arbre de retournement (3) tourillonnant dans un palier du bâti porté (1) et pouvant tourner à l'intervention d'un dispositif d'entraînement (2) à partir d'une première position de travail vers une seconde position de travail, un age (4) qui est articulé à l'arbre de retournement (3) au niveau d'un axe d'articulation (5) à peu près vertical dans les positions de travail, qui s'appuie dans sa zone antérieure et dans la zone de l'axe d'articulation (5) par l'intermédiaire de glissières (18, 19, 20) sur l'arbre de retournement (3), qui présente un centre de gravité situé, dans les positions de travail, environ à hauteur de l'axe central (6) de l'arbre de retournement et qui, lors de la rotation de l'arbre de retournement (3) depuis la première vers la seconde position de travail et inversement, passe chaque fois par son côté de corps de charrue au-dessus de l'arbre de retournement (3), et une bielle réglable en longueur (7) installée entre le bâti porté (1) et l'age (4) dans la zone antérieure de ce dernier, qui est articulée à un point d'attache (8) sur l'age (4) et qui est en prise par une articulation avec un point d'attache (9) disposé verticalement à une certaine distance en dessous de l'axe central (6) de l'arbre de retournement (3) sur le bâti porté (1), caractérisée en ce qu'un autre point d'attache (11) est prévu et la bielle (7) peut être reliée au choix au point d'attache (9) situé sur le bâti porté (1) ou au point d'attache (11) situé sur l'arbre de retournement (3).

2. Charrue réversible suivant la revendication 1, caractérisée en ce que les points d'attache (9, 11) situés sur le bâti porté (1) et sur l'arbre de retournement (3) forment un logement (13) pour un pivot (14) d'une articulation à rotule (15) prévue à l'extrémité interne de la bielle (7) qui peut être introduit et fixé dans ce logement et être retiré de celui-ci.

3. Charrue réversible suivant la revendication 2, caractérisée en ce que le logement (13) sur le bâti porté (1) prédéfinit une orientation pour le pivot (14) de l'articulation à rotule pour laquelle l'axe (17) du pivot situé dans un plan commun avec l'axe central (6) de l'arbre de retournement (3) coupe l'axe central de l'arbre de retournement sous un angle aigu.

4. Charrue réversible suivant la revendication 2, caractérisée en ce que le logement (13) sur l'arbre de retournement (3) prédéfinit pour le pivot (14) de l'articulation à rotule une orientation pour laquelle l'axe (17) du pivot situé dans un plan commun avec l'axe central (6) de l'arbre der retournement (3) coupe l'axe central de l'arbre de retournement sous un angle aigu.

5. Charrue réversible suivant l'une quelconque des revendications 1 à 4, caractérisée en ce que la zone antérieure de l'age (4) prend appui par des glissières (19) sur des galets de guidage tournants (18) montés sur l'arbre de retournement (3).

6. Charrue réversible suivant la revendication 5, caractérisée en ce que les axes de rotation des galets de guidage (18) présentent une orientation radiale par rapport à l'axe d'articulation (5) entre l'age (4) et l'arbre de retournement (3).

7. Charrue réversible suivant l'une quelconque des revendications 1 à 6, caractérisée en ce que l'age (4) prend appui dans le domaine de l'axe d'articulation (5) par des glissières de guidage (21) sur un galet de guidage (20) monté à rotation à l'extrémité postérieure de l'arbre de retournement (3).

Fig. 2

Fig. 1

0 094 551

Fig. 3

Fig. 4

9